(19) **Europäisches Patentamt**
**European Patent Office**
**Office européen des brevets**

(11) **EP 1 783 381 B1**

(12) **EUROPÄISCHE PATENTSCHRIFT**

(45) Veröffentlichungstag und Bekanntmachung des Hinweises auf die Patenterteilung:
**05.08.2009   Patentblatt 2009/32**

(51) Int Cl.:
***F16B 19/08*** *(2006.01)*

(21) Anmeldenummer: **06022319.5**

(22) Anmeldetag: **25.10.2006**

(54) **Stanzniet**

Self piercing rivet

Rivet autoperforant

(84) Benannte Vertragsstaaten:
**DE FR GB**

(30) Priorität: **02.11.2005   DE 102005052360**

(43) Veröffentlichungstag der Anmeldung:
**09.05.2007   Patentblatt 2007/19**

(73) Patentinhaber: **Böllhoff Verbindungstechnik GmbH**
**33649 Bielefeld (DE)**

(72) Erfinder:
• **Philipskötter, Andre**
**48351 Everswinkel (DE)**

• **Eckstein, Johannes**
**71067 Sindelfingen (DE)**
• **Ruther, Michael**
**72108 Rottenburg (DE)**
• **Wältz, Herbert**
**33758 Schloss Holte (DE)**
• **Porepp, Roland**
**03246 Crinitz (DE)**

(74) Vertreter: **Hauck Patent- und Rechtsanwälte**
**Schwanthalerstrasse 106**
**80339 München (DE)**

(56) Entgegenhaltungen:
**EP-B1- 0 720 695**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 783 381 B1

**Beschreibung**

Die vorliegende Erfindung betrifft einen Stanzniet in Form eines Halbhohlstanznietes oder Hohlstanznietes zum Herstellen einer Stanznietverbindung zwischen zwei oder mehr Blechen.

Das Stanznieten als Fügeverfahren hat in der jüngeren Vergangenheit zunehmend an Bedeutung gewonnen. Ein wichtiger Parameter für den Fügevorgang sowie die Verbindungsqualität der Stanznietverbindung ist die Geometrie des Stanznietes. Im Stand der Technik sind zahlreiche unterschiedliche Geometrien des Stanznietes bekannt, siehe z.B. EP 0 720 695, EP 1 064 466, EP 1 229 254, EP 1 387 093, DE 44 31 769, DE 203 19 610 U1, DE 200 01 103 U1, US 2004/0068854 A1, JP 2001159409A, JP 09317730A u.a.

Der Stanzniet nach der oben genannten EP 0 720 695, welcher üblicherweise als C-Niet bezeichnet wird; wird in großem Umfang in der Kraftfahrzeugindustrie, aber auch in anderen technischen Bereichen eingesetzt. Es handelt sich um einen Halbhohlstanzniet mit einem Nietkopf und einem Nietschaft mit einer zentralen Schaftbohrung, von denen der Nietkopf eine ebene Oberseite und eine zylindrische Kopfaußenfläche und der Nietschaft eine zylindrische Schaftaußenfläche und eine die zentrale Schaftbohrung begrenzende zylindrische Schaftinnenfläche hat. Die zylindrische Kopfaußenfläche und die zylindrische Schaftaußenfläche sind durch einen relativ großen Radius unmittelbar miteinander verbunden. Im Fußbereich des Stanznietes ist die zentrale Schaftbohrung als Konus ausgebildet, wobei die Konusflanken nach Angaben in dieser Druckschrift leicht gewölbt sein sollen. Hierdurch wird im Rahmen der fertigungstechnisch gegebenen Möglichkeiten quasi eine "scharfe Kante" am Außenrand des Nietschaftes geschaffen, die in der Praxis im Allgemeinen etwas angefast ist. Nach den Angaben in dieser Druckschrift kann der Öffnungswinkel des Konus zwischen 25° und 120° liegen.

Wenngleich sich der C-Niet in der Praxis als erfolgreich erwiesen hat, stößt er jedoch insbesondere beim Stanznieten hochfester Stahlbleche an seine Grenzen.

So wäre z. B. eine Verbesserung im Hinblick auf die erzielbare Verbindungsqualität und Tragfestigkeit der Stanznietverbindung, Beanspruchung des Nietes während des Fügevorganges und Spaltbildung zwischen dem Niet und den Blechen wünschenswert.

Der vorliegenden Erfindung liegt die Aufgabe zugrunde, einen Stanzniet zum Fügen von Blechen insbesondere aus hochfesten Werkstoffen zu schaffen, welcher aufgrund seiner Geometrie vergleichsweise geringen Fügekräften und Spannungen beim Fügevorgang ausgesetzt ist, für ein optimiertes Tragverhalten, und eine optimierte Verbindungsqualität der Stanznietverbindung sorgt und die Spaltbildung zwischen Niet und Blechen möglichst gering hält.

Diese Aufgabe wird durch den im Patentanspruch 1 definierten Stanzniet gelöst.

Der erfindungsgemäß ausgebildete Stanzniet zeichnet sich durch die im Patentanspruch 1 definierte spezielle Geometrie im Unterkopfbereich sowie im Fußbereich aus. Hiernach sind die zylindrische Kopfaußenfläche und die Schaftaußenfläche durch eine konische Unterkopffase und einen Unterkopfradius verbunden, von denen der Unterkopfradius jeweils tangential in die Unterkopffase und die Schaftaußenfläche übergeht und die konische Unterkopffase mit einer Radialebene des Stanznietes einen Winkel von 20° +5°/-5° einschließt. Im Bereich des Nietfußes sind die Schaftaußenfläche und die Schaftinnenfläche durch eine plane Schaftstirnfläche, eine konische Schaftinnenfase und einen Schaftendradius verbunden, von denen der Schaftendradius jeweils tangential in die Schaftinnenfläche und die konische Schaftinnenfase übergeht und die plane Schaftstirnfläche mit der Schaftaußenfläche durch eine Schneidkante verbunden ist. Die ebene Schaftstirnfläche schließt mit einer Radialebene des Stanznietes einen Winkel von 0°-3°/+3° ein, und die konische Schaftinnenfase schließt mit einer Radialebene einen Winkel von 45°+10°/-5°ein.

Vorzugsweise ist die radiale Breite der planen Schaftstirnfläche größer als das 0,035fache des Durchmessers der zylindrischen Schaftaußenfläche und liegt insbesondere im Bereich zwischen dem 0,035 und 0,07fachen dieses Durchmessers. Der Unterkopfradius ist vorzugsweise kleiner als das 0,30fache, insbesondere 0,15fache des Durchmessers der zylindrischen Schaftäußenfläche.

Wie anhand von Versuchen und mit Hilfe der Finite-Elemente-Methode (FEM) nachgewiesen wurde, hat der erfindungsgemäß ausgebildete Stanzniet zahlreiche Vorteile gegenüber herkömmliche Stanznieten, insbesondere gegenüber dem oben erwähnten C-Niet. Die spezielle Nietgeometrie des erfindungsgemäß ausgebildeten Stanznietes ermöglicht Fügekraftreduzierungen zum Herstellen der Stanznietverbindung, ein vorzugsweise für hochfeste Stähle optimiertes Trennen des stempelseitigen Bleches, ein angepasstes, gleichmäßiges Aufspreizverhalten nach dem Trennen des oberen Bleches, sodass die Schädigung, Verformung und Rissgefahr im Stanzniet deutlich reduziert werden können. Durch den optimierten Trennprozess ist die Spannungsverteilung im Nietschaft viel homogener als beispielsweise beim C-Niet. Die absoluten Spannungen im Nietschaft - Zugspannungen auf der Schaftinnenseite und Druckspannungen auf der Schaftaußenseite - können reduziert werden, sodass der Spannungsgradient über die Schaftbreite viel gleichmäßiger ausfällt. Durch dieses Merkmal wird die Schädigung des Stanznietes während des Trennprozesses minimiert, und es werden gute Voraussetzungen für den weiteren Setzprozess (Aufspreizen des Nietes, Erzeugen der Nietkopfendlage, Rückfedern der Bleche nach Werkzeugwegnahme) geschaffen.

Durch die plane Schaftstirnfläche in Verbindung mit dem Schaftinnenradius wird ein gleichmäßiges, gleichförmiges, kontinuierliches Aufspreizen des Stanznietes ermöglicht, das zu einem homogenen Spannungsaufbau im Stanzniet führt und Sprünge in der Stanznietbelastung vermeidet. Die "stumpfe" Ausführung des Nietschaftes im Trerinbereich (Nietfußbereich) führt dazu, dass die Prozesssicherheit erhöht wird. Ferner führt sie zu einer flächigen Belastung des matrizenseitigen Bleches und vermeidet das Durchstanzen bzw. das Versagen des matrizenseitigen Bleches.

Durch die spezielle Unterkopfgeometrie kann der Fügekraftbedarf bzw. die Fügearbeit reduziert werden, weil das stempelseitige Blech erst sehr spät mit der Unterseite des Nietkopfes in Kontakt gerät, der Kraftbedarf zur Erzeugung der Nietkopfendlage erst sehr spät benötigt wird und die Steigung im Kraftwegverlauf vergleichsweise groß ist. Durch den späten Kontakt der speziellen Unterkopfgeometrie mit dem stempelseitigen Blech und den schnellen (charakteristisch kurzen) Stempelweg zur Erzeugung der Nietkopfendlage werden die Bleche möglichst wenig verformt, sodass die Rückstellwirkung der Bleche nach dem Fügevorgang wesentlich geringer ausfällt als im Stand der Technik. Dadurch, dass der Stanzniet erst nach dem Durchtrennen des stempelseitigen Bleches aufspreizt, entsteht eine saubere Schneidkante des stempelseitigen Bleches. Diese führt nach dem Setzprozess zu einer optimalen Anlagefläche des stempelseitigen Bleches am Nietschaft. Diese Art der Spaltbildung zwischen Niet und Blech wird somit durch die Nietgeometrie gemäß der Erfindung deutlich reduziert.

Zwischen den Blechen kann sich bei dem erfindungsgemäß ausgebildeten Stanzniet ein vergleichsweise großer Spalt bilden, der eine Relativbewegung bzw. ein "Setzen" der Stanznietverbindung nach Wegnahme der Werkzeuge ermöglicht. Dies wirkt sich positiv auf die Rückstellwirkung der Bleche aus, weil die Bleche eine Art "Bewegungsfreiheit" haben. Als Potential dieser Spaltbildung ist eine höhere Tragfähigkeit unter schwingender Belastung zu nennen, da ein gewisses Setzverhalten der Bleche und damit der Stanznietverbindung eine bessere Homogenität der Spannungen in der gesetzten Verbindung ermöglicht.

Aus dem optimierten Setzprozess ergibt sich eine bessere Beanspruchung des Stanznietelementes. Die Belastung des Stanznietes während des Setzprozesses wird reduziert und gleichmäßiger gestaltet (im Wesentlichen durch den optimierten Streitprozess und das gleichförmige Aufspreizen des Nietes), und die Rückstellwirkung der Bleche durch die Unterkopfgeometrie wird minimiert, sodass sich eine bessere Stanznietqualität ergibt und sich daraus ein verbessertes Tragverhalten ableiten lässt.

Als weiterer Vorteil der speziellen Unterkopfgeometrie ist der geringere Verzug der gefügten Bleche zu nennen, weil das stempelseitige Material nicht zwingend radial verdrängt wird. Die Welligkeit, die durch die Umformung der Bleche hervorgerufen wird, kann durch den sehr viel kleineren Unterkopfradius und die punktuelle Anlage des Nietkopfes auf dem stempelseitigen Blech reduziert werden.

Der erfindungsgemäß ausgebildete Stanzniet wird vorzugsweise zum Fügen von Blechen aus hochfestem Stahl verwendet, kann jedoch ganz allgemein zum Fügen von Blechen aus beliebigem Werkstoff eingesetzt werden. Der Stanzniet selbst besteht aus einem hochfesten Stahl, kann jedoch auch aus anderen gängigen Nietwerkstoffen wie Edelstahl, Aluminium, Legierungen aus diesen Werkstoffen, Keramik, usw. bestehen.

Der erfindungsgemäß ausgebildete Stanzniet kann ein Halbhohlstanzniet (bei dem die zentrale Bohrung eine Sackbohrung ist) oder ein Hohlstanzniet (bei dem die zentrale Bohrung eine durchgehende Bohrung ist) sein.

Vorteilhafte Ausgestaltungen und Weiterbildungen der Erfindung sind in den Unteransprüchen definiert.

Anhand der Zeichnungen werden Ausführungsbeispiele der Erfindung näher erläutert. Es zeigt:

Fig. 1 einen Axialschnitt eines erfindungsgemäß ausgebildeten Halbhohlstanznietes;
Fig. 2 Schnittbilder beim Herstellen einer Stanznietverbindung am Ende des Trennvorganges, kurz vor Eindringen des Stanznietes in das matrizenseitige Blech, wobei die linke Seite einen herkömmlichen C-Niet und die rechte Seite einen erfindungsgemäß ausgebildeten Stanzniet gemäß Fig. 1 zeigt;
Fign. 3, 4 der Fig. 2 entsprechende artgleiche Schnittbilder, die jedoch mit Hilfe der FEM ermittelt wurden und in denen die Verteilung der größten Hauptspannung (Fig. 3 ) und des Umformgrades (Fig. 4) im Stanzniet bzw. der Stanznietverbindung gezeigt ist;
Fig. 5 Schnittbilder einer fertigen Stanznietverbindung, wobei die linke Seite einen herkömmlichen C-Niet und die rechte einen erfindungsgemäß ausgebildeten Stanzniet gemäß Fig. 1 zeigt;
Fign. 6, 7 Diagramme, in denen die von einer erfindungsgemäß ausgebildeten Stanznietverbindung übertragbare Standardkraft über dem Standardweg bei Scherzugbeanspruchung (Fig. 6) bzw. Kopfzugbeanspruchung (Fig. 7) aufgetragen ist, wobei es sich um eine Stanznietverbindung artgleicher Bleche handelt;
Fig. 8, 9 den Fign. 6 bzw. 7 entsprechenden Diagramme, die jedoch für eine Stanznietverbindung aus artfremden Blechen besteht;
Fig. 10 einen der Fig. 1 entsprechenden Axialschnitt durch einen erfindungsgemäß ausgebildeten Hohlstanzniet;
Fign. 11 - 15 der Fig. 10 entsprechende Axialschnitte unterschiedlicher Ausführungsformen eines Hohlstanznietes in verkleinertem Maßstab.

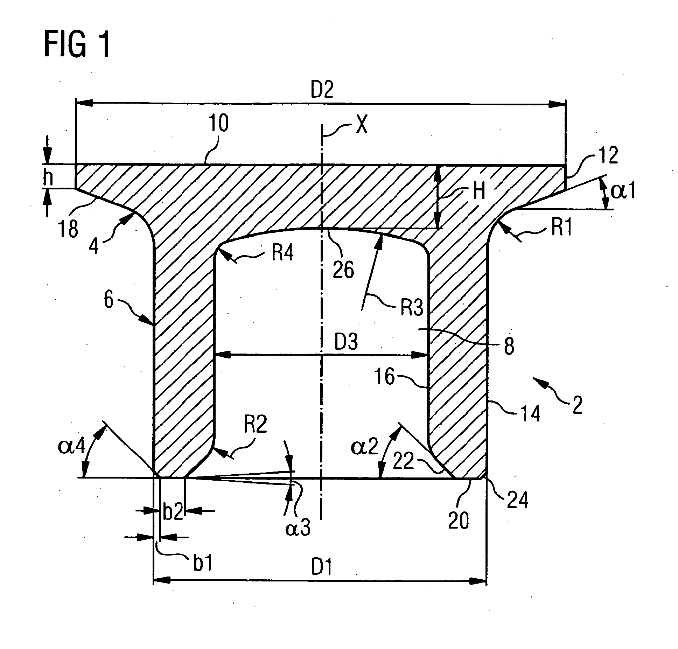

Anhand der Fig. 1 wird ein konkretes Ausführungsbeispiel eines erfindungsgemäß ausgebildeten Halbhohlstanznietes beschrieben.

Der Stanzniet 2 ist bezüglich einer zentralen Achse X rotationssymmetrisch ausgebildet und besteht aus einem Nietkopf 4 und einem Nietschaft 6 mit einer zentralen Bohrung 8, die als Sackbohrung ausgebildet ist.

Der Nietkopf 4 hat eine (vorzugsweise plane) Oberseite 10 und eine (vorzugsweise zylindrische) Kopfaußenfläche 12. Die Kopfaußenfläche 12 hat einen Durchmesser D2 und eine axiale Höhe h.

Der Nietschaft 6 hat eine zylindrische Schaftaußenfläche 14 und eine zylindrische Schaftinnenfläche 16, welche die Bohrung 8 begrenzt. Die zylindrische Schaftaußenfläche 14 hat einen Durchmesser D1, und die zylindrische Schaftinnenfläche hat einen Durchmesser D3. Es sei darauf hingewiesen, dass die Schaftaußenfläche 14 für bestimmte Anwendungsfälle zumindest bereichsweise geringfügig divergierend ausgebildet sein kann, um die Spaltbildung zwischen den gefügten Blechen zu minimieren.

Die zylindrische Kopfaußenfläche 12 ist mit der zylindrischen Schaftaußenfläche 14 über eine konische Unterkopffase 18 und einen Radius R1 verbunden. (Unter dem Begriff "Radius" ist im vorliegenden Rahmen eine Ringfläche zu verstehen, die in einem Axialschnitt die Form eines Kreisbogens mit dem Radius R hat.)

Der Radius R1 verläuft jeweils tangential in die Unterkopffase 18 sowie in die Schaftaußenfläche 14, während die Unterkopffase 18 an der Kopffläche 12 unmittelbar angrenzt (z. B. über einen Radius). Die Unterkopffase 18 schließt mit einer Radialebene einen Winkel α1 ein.

Im Bereich des Nietfußes ist die Schaftaußenfläche 14 mit der Schaftinnenfläche 16 über eine plane Schaftstirnfläche 20, eine Schaftinnenfase 22 und einen Radius R2 verbunden, wobei zwischen der Schaftaußenfläche 14 und der planen Schaftstirnfläche 20 eine umlaufende Schneidkante 24 vorgesehen ist. Die plane Schaftstirnfläche 20 verläuft rechtwinkelig zu der Achse X, wobei Abweichungen hiervon innerhalb eines Winkels α3 zulässig sind. Die Schaftinnenfase 22 ist zu einer Radialebene des Stanznietes 2 unter einem Winkel α2 geneigt. Der Radius R2 verläuft jeweils tangential in die Schaftinnenfläche 16 und die Schaftinnenfase 22. Die plane Schaftstirnfläche 20 hat eine radiale Breite b2.

Die Schneidkante 24 ist im Idealfall scharfkantig. In der Praxis kann sie jedoch herstellungsbedingt als Fase oder Abrundung ausgebildet sein, welche eine radiale Breite b1 hat. Im Fall einer Fase schließt die Schneidkante 24 mit einer radialen Ebene den Winkel α4 ein.

Die Bohrung 8 hat im Unterkopfbereich einen gewölbten Nutgrund 26, der sich aus einem zentralen Radius R3 und zwei seitlichen Radien R4 zusammensetzt. Die seitlichen Radien R4 verlaufen jeweils tangential in die Schaftinnenfläche 16 und den Radius R3. Der Nietkopf 4 hat auf der Achse X eine axiale Höhe H.

Gemäß dem bevorzugten Ausführungsbeispiel haben die angegebenen Abmessungen die folgende Größe:

$$D1 = 5{,}3 + 0{,}1/\!-\!0{,}1 \text{ mm}$$

$$D2 = 7{,}75 + 0{,}15/\!-\!0{,}15 \text{ mm}$$

$$D3 = 3{,}40 + 0{,}30/\!-\!0{,}00 \text{ mm}$$

$$D2 = 7{,}75 + 0{,}15/\!-\!0{,}15 \text{ mm}$$

$$D3 = 3{,}40 + 0{,}30/\!-\!0{,}00 \text{ mm}$$

$$h = 0{,}40 + 0{,}00/\!-\!0{,}20 \text{ mm}$$

$$H = 1{,}00 + 0{,}00/\!-\!1{,}00 \text{ mm}$$

$$b1 = 0{,}35 + 0{,}10/\!-\!0{,}15 \text{ mm}$$

$$b2 = 0{,}10 + 0{,}00/\!-\!0{,}1 \text{ mm}$$

$$R1 = 0{,}67 + 0{,}10/\!-\!0{,}10 \text{ mm}$$

$$R2 = 0{,}7 + 0{,}1/\!-\!0{,}1 \text{ mm}$$

$$R4 = 0{,}27 + 0{,}05/\!-\!0{,}05 \text{ mm}$$

$$R3 = 6{,}01 + 0{,}10/\!-\!0{,}10 \text{ mm}$$

$$\alpha1 = 20° + 5°/\!-\!5°$$

$$\alpha2 = 45° + 10°/\!-\!5°$$

$$\alpha3 = 0° + 3°/\!-\!3°$$

$$\alpha4 = 45° + 5°/\!-\!5°$$

Die axiale Länge des Stanznietes 2 beträgt im dargestellten Ausführungsbeispiel 5 mm. Es sei jedoch darauf hingewiesen, dass auch andere standardmäßig verwendete Nietlängen von mehr oder weniger als 5 mm bei im Übrigen gleichen Abmessungen möglich sind.

Besonderes Augenmerk ist auf die Geometrie des Stanznietes 2 im Nietfußbereich sowie im Unterkopfbereich zu richten:

Durch den relativ kleinen Winkel $\alpha 1$ der Unterkopffase 18 und den relativ kleinen Radius R1 zwischen der Unterkopffase 18 und der Schaftaußenfläche 14 ist unterhalb des Nietkopfes 4 außerhalb des Nietschaftes 6 ein relativ großer Freiraum vorhanden. Die Folge ist, dass der Nietkopf 4 während des Fügeprozesses relativ spät mit dem stempelseitigen Blech in Berührung gelangt und die Durchbiegung (der Biegeanteil) des stempelseitigen Bleches relativ gering ist. Anders ausgedrückt, kommt es zu einem entsprechend geringen "Materialeinzug" (Blecheinzug).

Dies wirkt sich in mehrfacher Hinsicht vorteilhaft aus: Es ergibt sich eine optimale Nietkopfendlage im stempelseitigen Blech, was zu einer entsprechenden "Ebenheit" der Oberseite der Stanznietverbindung führt. Aufgrund des späten Kontaktes zwischen Unterkopfgeometrie und stempelseitigem Blech, der vergleichsweise geringen Durchbiegung des stempelseitigen Bleches verringern sich - im Vergleich zu herkömmlichen Stanznieten wie dem eingangs erwähnten C-Niet - die für den Fügevorgang erforderlichen Fügekräfte. Dies wiederum führt zu entsprechend verringerten Spannungen im Stanzniet während des Setzprozesses, wodurch die Schädigung, Verformung und die Rissgefahr entsprechend reduziert werden. Wie bereits eingangs erläutert, wird der Kraftbedarf zur Erzeugung der Nietkopfendlage erst sehr spät benötigt, und die Steigung im Kraftweg -verlauf ist vergleichsweise groß. Die Nietkopfendlage wird erst spät erzeugt, und die Erzeugung der Nietkopfendlage geschieht relativ schnell und mit einem deutlichen Anstieg der Kraft.

Durch den späten Kontakt der speziellen Unterkopfgeometrie mit dem stempelseitigen Blech und durch den schnellen (charakteristisch kurzen) Stempelweg zur Erzeugung der Nietkopfendlage werden die Bleche möglichst wenig verformt, sodass die Rückstellwirkung der Bleche nach dem Fügevorgang wesentlich geringer ausfällt als im Stand der Technik.

Diese und weitere durch die Unterkopfgeometrie erzielten Auswirkungen stehen in funktionellem Zusammenhang mit den durch die Nietfußgeometrie erzielten Auswirkungen:

Charakteristisch für die Fußgeometrie ist die plane Schaftstirnfläche 20, die praktisch in einer Radialebene des Nietes liegt und über die Schaftinnenfase 20 mit dem speziellen Winkel $\alpha 2$ und über den Radius R2 in die Schaftinnenfläche 16 übergeht. Diese spezielle Fußgeometrie, insbesondere die plane Schaftstirnfläche 20, bewirkt eine gezielte Führung des Stanznietes während des Fügevorganges. Hierdurch wird ein vorzeitiges Aufspreizen des Stanznietes beim Durchtrennen des stempelseitigen Bleches verhindert, während es durch die Kombination von 20, 22 und R2 zu einem kontrollierten und gleichmäßigen Aufspreizen des Nietschaftes 6 beim Eindringen des Nietes in das matrizenseitige Blech (also dort, wo das Aufspreizen erwünscht ist) kommt.

Die Folge ist ein sauberer Schneidvorgang beim Durchtrennen des stempelseitigen Bleches. Zwar wird der Fügekraftbedarf sowie die erforderliche Umformarbeit (d. h. die aufzubringende Energie) nicht zwingend verringert, aber die Schädigung des Nietes weitestgehend vermieden. Da ferner die in das stempelseitige Blech eindringende Ringfläche im ungespreizten Zustand kleiner als im gespreizten Zustand (wie beim C-Niet) ist, kommt es zu einer weiteren Verringerung der erforderlichen Schneid- bzw. Fügekräfte. Dies wirkt sich wiederum in entsprechend verringerten Spannungen im Stanzniet aus. Da ferner der Nietschaft beim Durchtrennen des stempelseitigen Bleches noch nicht aufgespreizt wird, treten nur geringfügige Biegespannungen auf, so dass die Spannungsverteilung im Niet vergleichsweise homogen (gleichmäßig) ist und nur geringe Zug- und Druckspannungen auf der Innen- bzw. Außenseite des Nietschaftes vorhanden sind, sodass im Idealfall nur axiale Druckspannungen im Schaft entstehen. Eine vorzeitige Schädigung des Stanznietes beim Fügevorgang wird hierdurch vermieden, und die Rissgefahr wird entsprechend verringert.

Ein weiterer sich hierbei ergebender Vorteil besteht darin, dass an der Trennebene zwischen den Blechen frühzeitig kein offener Spalt entsteht, der dann nicht mehr geschlossen werden kann, was ebenfalls zu einer reduzierten Spaltbildung in der fertigen Stanznietverbindung führt.

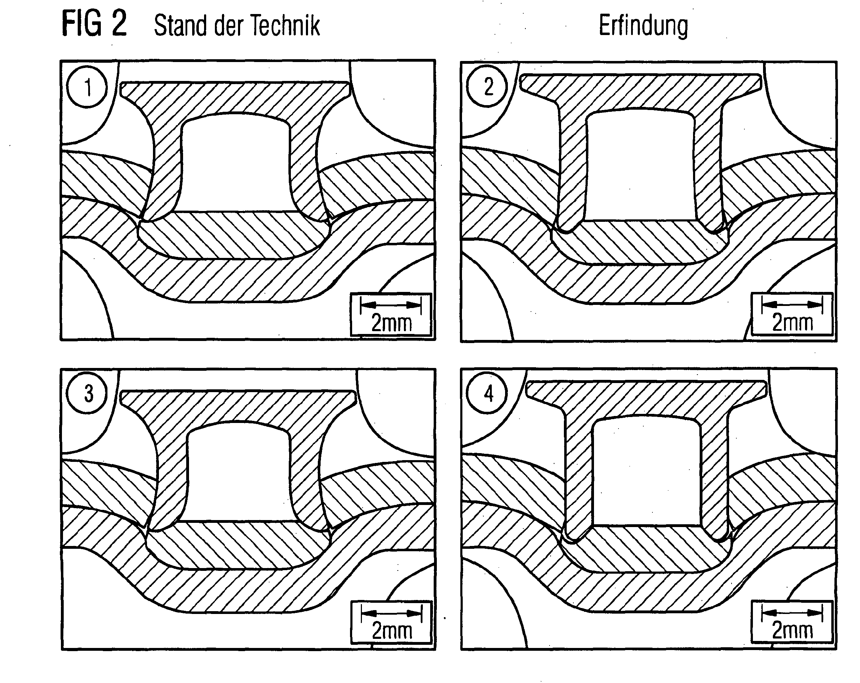

Die beschriebenen Auswirkungen wurden sowohl experimentell wie auch durch die Finite-Element-Methode (FEM) bestätigt, wie nun anhand der Figuren 2 bis 9 erläutert wird.

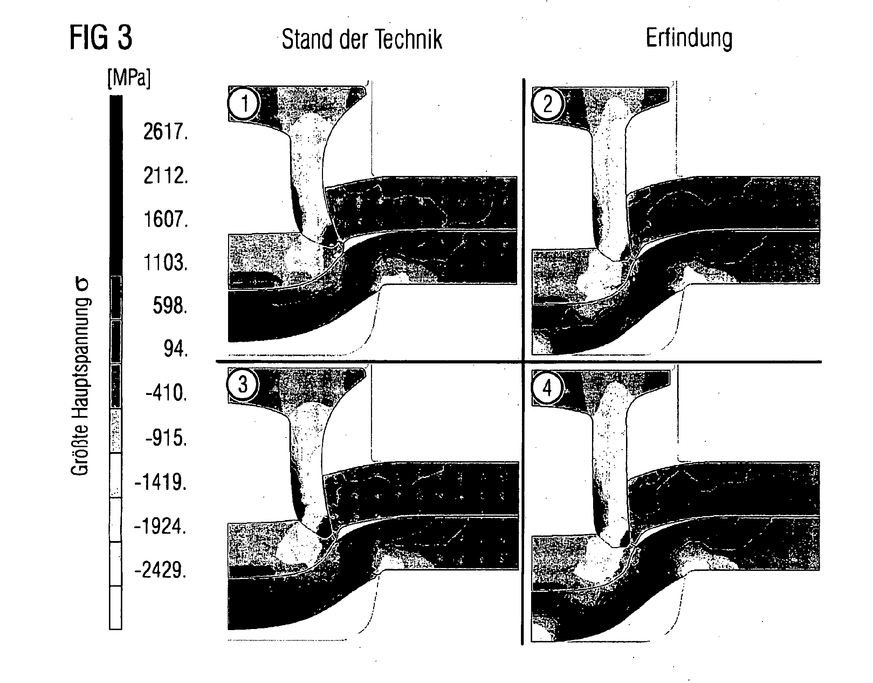

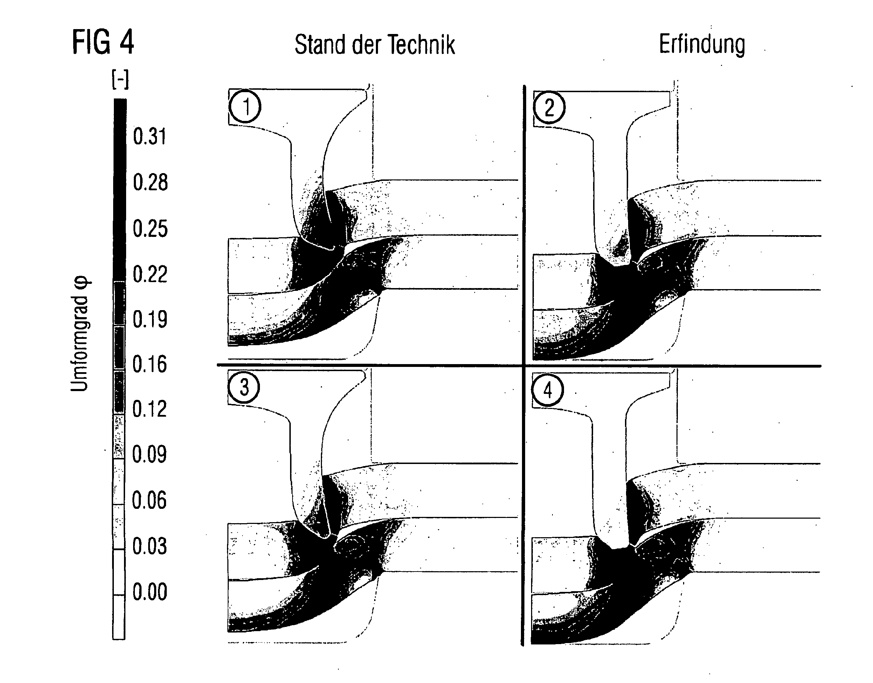

Fig. 2 zeigt bei Versuchen erstellte, mit den Ziffern 1 bis 4 bezeichnete Schnittbilder, die den Zustand nach dem Durchtrennen des stempelseitigen Bleches und vor dem Eindringen des Stanznietes in das matrizenseitige Blech darstellen. Die Fign. 3 und 4 zeigen ähnliche Schnittbilder, die jedoch mit Hilfe der FEM gewonnen wurden. Die mit 1 und 3 bezeichneten Schnittbilder auf der linken Seite der Figuren 2 bis 4 betreffen einen herkömmlichen C-Niet (EP 0 720 695), während die mit 2 und 4 bezeichneten Schnittbilder auf der rechten Seite der Figuren 2 bis 4 einen erfindungsgemäß ausgebildeten Stanzniet gemäß Fig. 1 betreffen.

Beide Bleche waren artgleich, d. h. sie bestanden aus einem hochfesten Stahl (HT800T), und sie hatten eine Blechdicke von 1,5 mm. Die Stanzniete bestanden aus einem Stanznietwerkstoff der Härte 6 (35B2) und der Härte 7 (45B2), wobei die Schnittbilder mit den Ziffern 1 und 2 Stanzniete der Härte 6 und die Schnittbilder mit den Ziffern 3 und 4 Stanzniete mit der Härte 7 betreffen.

Wie ein Vergleich der Schnittbilder auf der linken und rechten Seite der Fig. 2 zeigt, wird der C-Niet (Stand der Technik) beim Schneidvorgang bereits deutlich aufgeweitet, während der Stanzniet nach der Erfindung nahezu unverformt bleibt. Der Niet gemäß der Erfindung erfährt daher einen geradlinigen, senkrechten Schnitt, im Gegensatz zu dem C-Niet, bei dem es zu einem schrägen Schneiden kommt. Die Folge ist, dass der Nietschaft des erfindungsgemäß ausgebildeten Stanznietes nahezu einer reinen Druckbeanspruchung ausgesetzt ist, wogegen der Nietschaft des C-Nietes einer ungleichmäßigen Belastung (Biegebeanspruchung) unterliegt, d.h. im Innenbereich auf Zug und im Außenbereich auf Druck belastet wird. In dem mit 3 bezeichneten Schnittbild ist zu erkennen, dass der C-Niet auf der Innenseite bereits eingerissen ist.

Die obigen Ergebnisse werden durch die mittels der FEM gewonnenen Schnittbilder der Fig. 3 bestätigt, in denen durch unterschiedliche Schattierungen die Verteilung der größten Hauptspannung σ angedeutet wird. Mit "größter Hauptspannung" ist die betragsmäßig größte Hauptspannung gemeint. Die linksseitige Schattierungsskala macht deutlich, dass die Spannungen von Hell nach Dunkel zunehmend größer werden, wobei negative Spannungen die Druckspannungen und positive Spannungen die Zugspannungen darstellen.

Wie ein Vergleich der linken und rechten Seite der Figur 3 zeigt, ist die Spannungsverteilung im Nietschaft des erfindungsgemäß ausgebildeten Stanznietes weitestgehend gleichförmig, während die Spannungsverteilung im C-Niet sehr viel ungleichmäßiger ist. Insbesondere sind im Nietschaft des C-Nietes auf der Außenseite hohe Druckspannungsspitzen und auf der Innenseite hohe Zugspannungsspitzen zu erkennen, die von der Durchbiegung (Aufweitung) des Nietschaftes herrühren. In den C-Nieten sind deutlich größere Spannungsgradienten zu erkennen.

In den Schnittbildern der Fig. 4 ist durch unterschiedliche Schattierungen des Umformgrades φ angedeutet. Auch hier ist deutlich zu erkennen, dass der erfindungsgemäß ausgebildete Stanzniet auf der rechten Seite der Fig. 4 am Ende des Schneidvorganges nur eine sehr geringe Verformung erfahren hat, wogegen der C-Niet bereits stark verformt (aufgeweitet) ist. Die Umformarbeit, d. h. die aufzubringende Energie, ist zwar bei dem erfindungsgemäß ausgebildeten Stanzniet nicht zwingend geringer als bei dem C-Niet, jedoch stellt sich ein deutlich besserer Trennprozess ein.

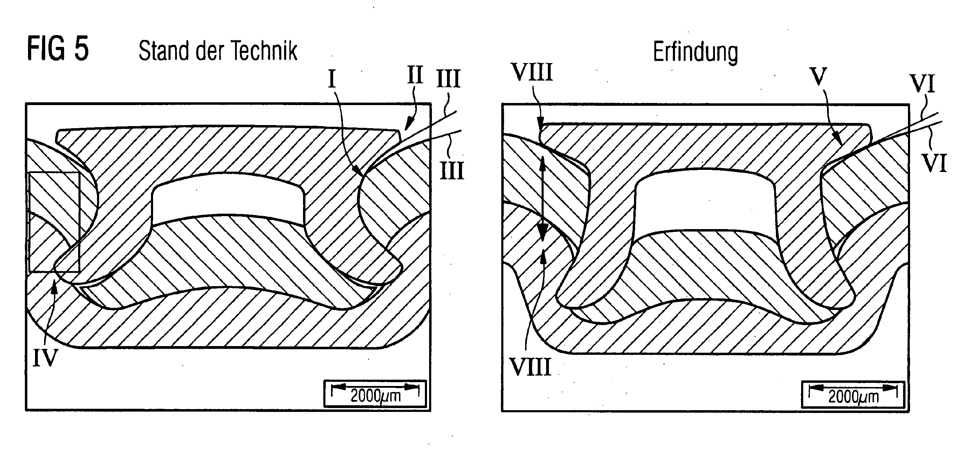

Es wird nun auf die Fig. 5 Bezug genommen, die zwei Schnittbilder einer Fertiggestellten Stanznietverbindung zwischen zwei Blechen zeigt, wobei die linke Seite einen herkömmlichen Stanzniet (C-Niet) und dir rechte Seite eine Stanzniet gemäß der Erfindung (Fig. 1) betrifft.

Da der erfindungsgemäß ausgebildete Stanzniet (rechte Seite der Fig. 5) erst nach dem Durchtrennen des stempelseitigen Bleches aufspreizt, entsteht eine saubere Schneidkante des stempelseitigen Bleches. Dies führt nach dem Setzprozess zu einer optimalen Anlagefläche des oberen Bleches am Nietschaft.

Wie auf der linken Seite der Fig. 5 durch den Pfeil I angedeutet ist, beginnt bei dem C-Niet eine punktuelle Anlage zwischen dem stempelseitigen Blech und dem Nietkopf bereits im Radius R 1 (Fig. 1), welcher beim Setzprozess in eine flächige Belastung übergeht und die Fügekraft unnötig erhöht. Außerdem führt sie beim Setzprozess zu einer in radialer Richtung größer werdenden Spaltbildung zwischen der Oberseite des stempelseitigen Bleches und dem Nietkopf wie durch den Pfeil II und die Linien III angedeutet wird. Der erfindungsgemäß ausgebildete Stanzniet auf der rechten Seite der Fig. 5 zeigt ein deutlich anderes Verhalten. Bei dem erfindungsgemäß ausgebildeten Stanzniet tritt das stempelseitige Blech erst sehr spät in Kontakt mit der Unterkopffase 118 (und nicht mit dem Radius R 1), der Kontakt wird nicht zwingend flächig (wodurch sich die geringen Fügekräfte erklären lassen), und nach dem Setzprozess stellt sich eine Spaltbildung zwischen dem Nietkopf und dem stempelseitigen Blech ein, die radial von außen nach innen größer wird und eine punktuelle Anlagefläche im korrosiv gefährdeten Bereich ermöglicht, siehe den Pfeil V und die beiden Linien VI. Die beiden Unterkopfgeometrien unterscheiden sich wesentlich im Kraftweg-Verlauf zum Erzeugen der Nietkopfendlage, den entstehenden Spannungen beim Setzprozess, in den Rückstellkräften der Stanznietverbindung nach dem Setzprozess und die Spaltbildung zwischen dem Nietkopf und dem stempelseitigen Blech nach Beendigung des Prozesses.

Ein weiterer Unterschied zwischen den beiden Stanznietverbindungen auf der linken und rechten Seite der Fig. 5 ist im Bereich der Pfeile IV und VIII zu sehen. Während es bei dem auf der linken Seite dargestellten C-Niet zu einer stark verspannten C-Nietverbindung kommt, ergibt sich bei der Stanznietverbindung mit dem erfindungsgemäß ausgebildeten Stanzniet eine gewisse Beweglichkeit des stempelseitigen Bleches unterhalb des Nietkopfes, was eine Relativbewegung/ein "Setzen" der Verbindung nach Wegnahme der Werkzeuge ermöglicht. Diese "Bewegungsfreiheit" wirkt sich positiv auf die Rückstellwirkung der Bleche aus. Ein möglicher Vorteil ist die sich hierdurch ergebende höhere Tragfähigkeit der Stanznietverbindung unter schwingender Belastung, da ein gewisses Setzverhalten der Bleche und damit der Stanznietverbindung eine bessere Homogenität der Spannungen in der gesetzten Stanznietverbindung ermöglicht.

Als weitere Vorteil der speziellen Unterkopfgeometrie kann der geringere Verzug der gefügten Bleche genannt werden, weil das stempelseitige Blech nicht zwingend radial verdrängt wird, wie dies beim C-Niet der Fall ist. Die Welligkeit, die durch die Umformung der Bleche hervorgerufen wird, wird durch den kleinen Unterkopfradius R 1 und die punktuelle Anlage des Nietkopfes auf dem stempelseitigen Blech reduziert, wie ein Vergleich der linken und rechten Seite der Fig. 5 zeigt.

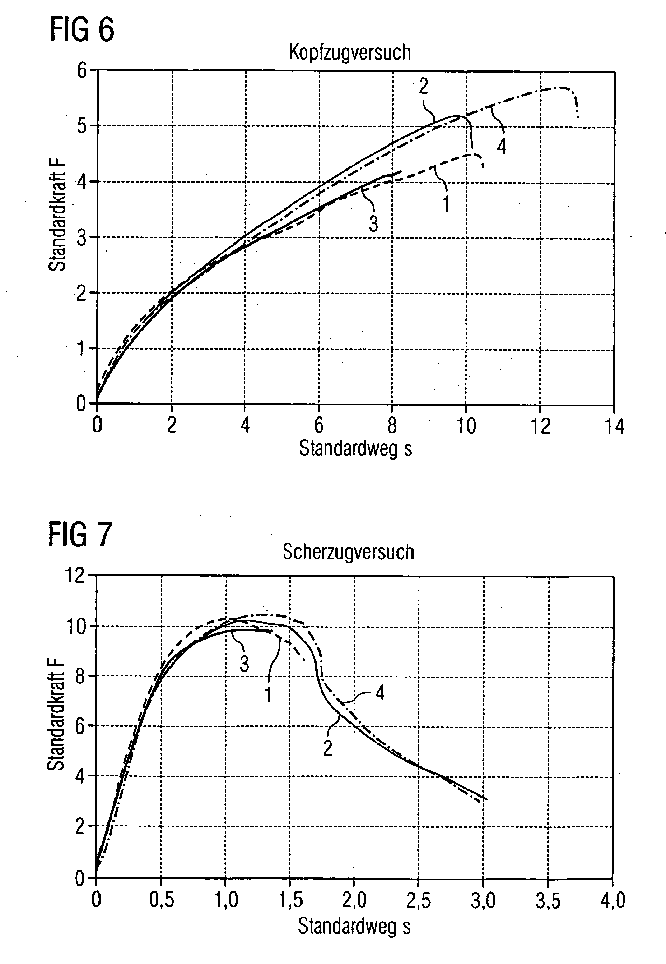

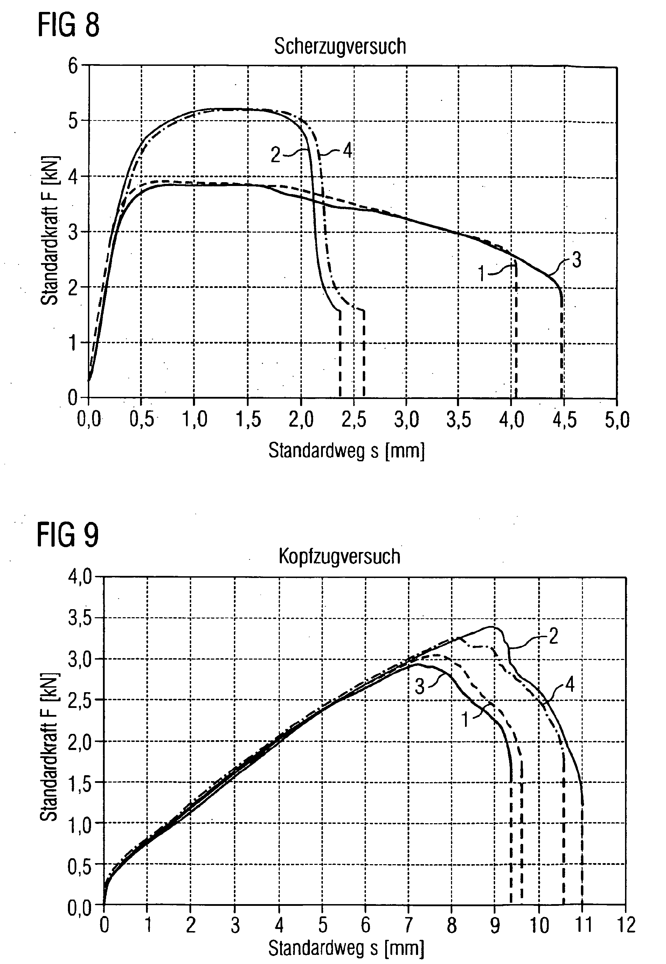

Stanznietverbindungen mit erfindungsgemäß ausgebildeten Stanznieten wurden Scherzug- und Kopfzugversuchen unterzogen. Die Ergebnisse sind in den Fign. 6-9 dargestellt, wobei die Diagramme der Fign. 6 und 7 dargestellt sind. Die Diagramme der Fign. 6 und 7 beziehen sich auf Stanznietverbindungen mit artgleichen Blechen (Stahl/Stahl) wie bei den Versuchen der Fign. 2 - 4, während die Diagramme der Fign. 7 und 8 sich auf artfremde Bleche (Aluminium/Stahl) beziehen.

Beim Kopfzugversuch werden die Bleche der Stanznietverbindung in axialer Richtung auseinander gezogen. Das Diagramm der Fig. 6 zeigt den Zusammenhang zwischen der hierbei übertragbaren Kraft (Standardkraft F) über der hierbei erfolgenden Verschiebung der Bleche (Standardweg s). Die mit 2 und 4 bezeichneten Kurven betreffen erfindungsgemäße Stanznieten der Härte 6 und 7 (wie in den Fign. 2 - 4), während die mit 1 und 3 bezeichneten Kurven herkömmliche C-Nieten der Härte 6 und 7 betreffen.

Wie sich der Fig. 6 entnehmen lässt, erreichen Stanznietverbindungen mit erfindungsgemäß ausgebildeten Stanznieten (Kurven 2 und 4) deutlich höhere Standardkräfte als solche mit herkömmlichen C-Nieten. Außerdem kommt es relativ früh zu einem Abreißen bzw. Abscheren der C-Niete, wohingegen die erfindungsgemäß ausgebildeten Stanzniete nicht versagen. Die erfindungsgemäß ausgebildeten Stanzniete haben somit ein deutlich größeres Arbeitsaufnahmevermögen als die Stanzniete gemäß dem Stand der Technik.

Beim Scherzugversuch werden die Bleche Stanznietverbindung senkrecht zur Nietachse auseinander gezogen. Das Diagramm der Fig. 7 zeigt, dass herkömmliche C-Niete (Kurven 1 und 3) frühzeitig abreißen bzw. abscheren; dies gilt insbesondere für Stanzniete der Härte H 7, siehe Kurve 3. Die erfindungsgemäß ausgebildeten Stanzniete (Kurven 2 und 4) versagen dagegen nicht; sie haben ein deutlich größeres Arbeitsaufnahmevermögen.

Die Fign. 8 und 9 zeigen den Fign. 7 bzw. 6 entsprechende Diagramme, welche Stanznietverbindungen aus artfremden Blechen (Aluminium/Stahl) betreffen. Wie Fig. 8 zeigt, wird bei Stanznietverbindungen mit dem erfindungsgemäß ausgebildeten Stanzniet (Kurven 2 und 4) eine maximal übertragbare Scherzugkraft in der Größenordnung von 5,2 - 5,3 kN erreicht. Im Gegensatz hierzu liegt die maximal übertragbare Scherzugkraft beim C-Niet in der Größenordnung von weniger als 4 kN.

Die Kopfzugversuche ergaben ähnliche Ergebnisse, wie das Diagramm der Fig. 9 zeigt. So sind die maximal übertragbaren Kopfzugkräfte von Stanznietverbindungen mit dem erfindungsgemäß ausgebildeten Stanzniet um ca. 0,3 - 0,7 kN größer als die entsprechenden Werte für den C-Niet.

Die Versuche und FEM-Untersuchungen wurden mit Stanznieten der in Fig. 1 dargestellten Geometrie durchgeführt. Diese Stanzniete hatten die insbesondere in der Kraftfahrzeugindustrie üblicherweise verwendeten Durchmesser D1 (Schaftaußenfläche 14) und D2 (Kopfaußenfläche 12) von 5,30 mm bzw. 7,75 mm. Es versteht sich jedoch, dass diese Durchmesser je nach Anwendungsfall geändert werden können. Die Winkel α1, α2 und α3 würden dann gleich bleiben, während sich die übrigen Abmessungen entsprechend der Durchmesseränderung ändern können.

Wie bereits erwähnt, ist der erfindungsgemäß ausgebildete Stanzniet insbesondere zum Fügen hochfester Stahlwerkstoffe (z. B. einer Zugfestigkeit RM > 600 MPa) geeignet, und er besteht selbst vorzugsweise aus einem hochfesten Stahlwerkstoff. Der Stanzniet kann jedoch auch zum Fügen von Blechen aus anderen Werkstoffen (duktile/niedrigfeste Werkstoffe) verwendet werden, und der Stanzniet kann auch aus anderen Werkstoffen wie z.B. Edelstahl, Aluminium, Legierungen dieser Materialien, Keramik usw. bestehen.

Erwähnenswert ist noch, dass bei dem Stanzniet mit der in Fig. 1 dargestellten Geometrie aufgrund des Durchmessers D3 und der Radien R3 und R4 eine relativ großvolumige Bohrung 8 geschaffen wird, die den beim Fügevorgang entstehenden Stanzbutzen aufnehmen kann. Dies trifft insbesondere beim Fügen von Blechen zu, bei denen das stempelseitige Blech weicher als das matrizenseitige Blech ist, bei dem also von "weich in hart" gefügt wird. Ist aber auch denkbar, wenn Niet aus Aluminium gefertigt wird und Al mit Al gefügt werden muß. Außerdem sind die Radien R3 und R4 im Bohrungsgrund 26 im Sinne einer Spannungsreduzierung optimal gewählt und an Fertigungsbedingungen /Herstellbarkeit angepasst. Die glatten Übergänge im Bereich der Radien R1, R2, R3 und R4 sorgen für eine "kerbfreie" Stanznietgeometrie, wodurch die Rissgefahr weiter reduziert wird.

Fig. 7 zeigt ein abgewandeltes Ausführungsbeispiel der Erfindung, bei dem die zentrale Bohrung 108 des Stanzniets 102 nicht als Sackbohrung, sondern als durchgehende Bohrung ausgebildet ist. Im Übrigen ist die Geometrie des Stanznietes 102 der Fig. 7 identisch mit derjenigen des Stanznietes 2 der Fig. 1. In Fig. 7 werden daher dieselben Bezeichnungen für die Winkel, Radien und Abmessungen h, b1, b2 sowie die gleichen Bezugszeichen, erhöht um 100, wie in Fig. 1 verwendet.

Hinsichtlich der Geometrie des Hohlstanznietes 102 und der dadurch erzielten Vorteile kann auf die Beschreibung des Halbhohlstanznietes 2 der Fig. 1 verwiesen werden. Zusätzlich ergeben sich bei dem Hohlstanzniet 102 der Fig. 7 folgende Vorteile und Möglichkeiten:

-    Das deutlich größere Bohrungsvolumen im Inneren des Nietschaftes kann - insbesondere bei der Fügerichtung "weich in hart" - das Material des Stanzbutzens aufnehmen. Dadurch kann der Blechwerkstoff auf Stempelseite ungehindert in Richtung des Stempels fließen.

-    Die Gefahr von Rissen im Schaftinneren wird vermieden, weil kein Schaftbutzen eingeschlossen wird.

-    Der Fügekraftbedarf wird signifikant reduziert, weil der eingeschlossene Butzen für die Hinterschnittbildung (Spreizen des Stanznietes) nicht verdrängt werden muss.

- Bei gegebener Stanznietlänge (z.B. 5 mm) können auf der Stempelseite vergleichsweise dicke Bleche (2 - 3 mm) verarbeitet werden, ohne die Hinterschnittbildung zu gefährden.
- Sämtliche geometrischen Kerben im Schaftinneren, die beim Halbhohlstanzniet zu Verspannungen und im ungünstigen Fall damit zu Rissen im Stanzniet führen können, fallen weg. Der Nietschaft kann sich beim Hohlstanzniet freier bewegen und dadurch besser die Beanspruchung beim Fügevorgang "verarbeiten".
- Die durchgehende Bohrung des Hohlstanznietes kann sich positiv auf das (schwingende) Tragverhalten der Stanznietverbindung auswirken, weil die elastisch-plastische Verklammerung des Stanznietes in der Stanznietverbindung gleichmäßiger geschieht. Das steifste Element in der Stanznietverbindung, der Stanzniet, ermöglicht durch die Ausführung als Hohlstanzniet einen homogeneren Härte-/Spannungsverlauf in der Stanznietverbindung.

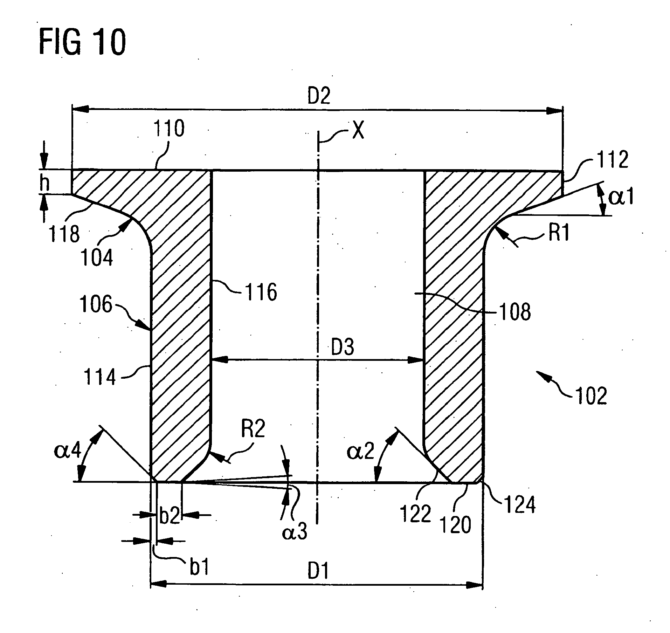

Bei dem Ausführungsbeispiel der Fig. 7 ist die die durchgehende Bohrung 108 begrenzende Schaftinnenfläche 116 vom Radius R2 aus durchgehend zylindrisch ausgebildet. Es ist jedoch auch möglich, dass die durchgehende Bohrung 108 im Kopfbereich in eine Erweiterung übergeht, wie dies die Ausführungsbeispiele der Fign. 8 bis 12 zeigen.

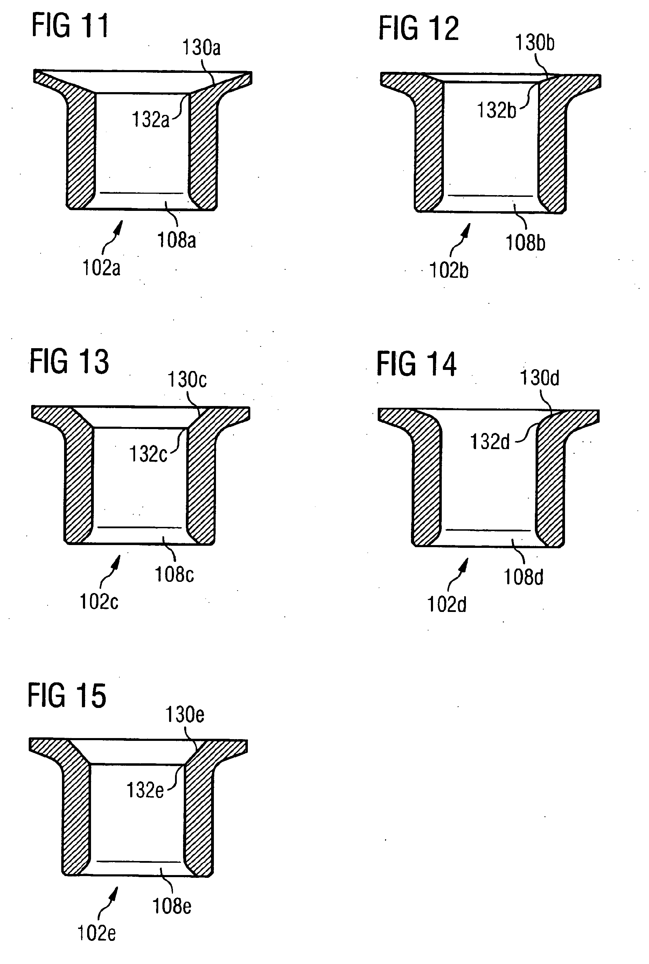

Die durchgehenden Bohrungen 108 a bis 108 e der Stanzniete 102 a bis 102 e in den Figuren 8 bis 12 gehen in Erweiterungen 130 a bis 130 e über, die jeweils als konische Flächen ausgebildet sind. Bei den Stanznieten der Fign. 8 bis 10 und 12 enden die Erweiterungen 130 a, 130 b, 130 c und 130 e in z. B. runden oder angefasten Kanten 132 a, 132 b, 132 c und 132 e, während bei dem Stanzniete 102 d der Fig. 11 die Erweiterung 130d in einem Radius 132d endet. Im Übrigen unterscheiden sich die Ausführungsbeispiele der Fign. 8 bis 12 lediglich hinsichtlich Größe und Neigung der konischen Erweiterungen.

## Patentansprüche

1. Stanzniet mit einem Nietkopf (4) und einem Nietschaft (6) mit einer zentralen Schaftbohrung (8), die sämtlich bezüglich einer zentralen Achse (X) rotationssymmetrisch ausgebildet sind, wobei der Nietkopf (4) eine Oberseite (10) und eine zylindrische Kopfaußenfläche (12) eines vorgegebenen Kopfdurchmessers (D2) hat,

   der Nietschaft (6) eine im Wesentlichen zylindrische Schaftaußenfläche (14) und eine die zentrale Schaftbohrung (8) begrenzende zylindrische Schaftinnenfläche (16) hat,

   die Kopfaußenfläche (12) und Schaftaußenfläche (14) durch eine konische Unterkopffase (18) und einen Unterkopfradius (R1) verbunden sind, welcher jeweils tangential in die konische Unterkopffase (18) und die Schaftaußenfläche (14) übergeht, **dadurch gekennzeichnet, dass** die konische Unterkopffase (18) mit einer Radialebene des Stanznietes einen Winkel ($\alpha$1) von 20°+5°/-5° einschließt, und die Schaftaußenfläche (14) und Schaftinnenfläche (16) an dem vom Nietkopf (4) abgewandten axialen Ende durch eine plane Schaftstirnfläche (20), eine konische Schaftinnenfase (22) und einen Schaftendradius (R2) verbunden sind, von denen der Schaftendradius (R2) jeweils tangential in die Schaftinnenfläche (16) und die konische Schaftinnenfase (22) übergeht und die plane Schaftstirnfläche (20) mit der Schaftaußenfläche (14) durch eine Schneidkante (24) verbunden ist, wobei die plane Schaftstirnfläche (20) mit einer Radialebene des Stanznietes einen Winkel ($\alpha$3) von 0-3°/+3° einschließt und die konische Schaftinnenfase (22) mit einer Radialebene des Stanznietes einen Winkel ($\alpha$2) von 45°+10°/-5° einschließt.

2. Stanzniet nach Anspruch 1, **dadurch gekennzeichnet, dass** die radiale Breite (b2) der planen Schaftstirnfläche (20) größer als das 0,035fache des Durchmessers (D1) der Schaftaußenfläche (14) ist.

3. Stanzniet nach Anspruch 1 oder 2, **dadurch gekennzeichnet, dass** der Unterkopfradius (R1) kleiner als das 0,30fache, insbesondere 0,20fache des Durchmessers (D1) der Schaftaußenfläche (14) ist.

4. Stanzniet nach einem der vorhergehenden Ansprüche, **dadurch gekennzeichnet, dass** die Schneidkante (24) zwischen der planen Schaftstirnfläche (20) und der Schaftaußenfläche (14) eine radiale Breite (b1) von weniger als 0,1 mm hat.

5. Stanzniet nach einem der vorhergehenden Ansprüche, bei dem der Kopfdurchmesser (D2) 7,75 mm + 0,15 mm/-0,15 mm und der Durchmesser (D1) der Schaftaußenfläche (14) 5,3 mm + 0,1 mm/-0,1 mm beträgt, **dadurch gekennzeichnet, dass** die radiale Breite (b2) der planen Schaftstirnfläche (20) 0,35 mm + 0,10 mm/-0,15 mm beträgt.

6. Stanzniet nach Anspruch 5, **dadurch gekennzeichnet, dass** der Unterkopfradius (R1) 0,67 mm + 0,10 mm/-0,10 mm beträgt.

7. Stanzniet nach Anspruch 5 oder 6, **dadurch gekennzeichnet, dass** der Schaftendradius (R2) 0,70 mm + 0,1 mm/-0,1 mm beträgt.

8. Stanzniet nach einem der Ansprüche 5 bis 7, **dadurch gekennzeichnet, dass** der Durchmesser (D3) der Schaftinnenfläche (16) 3,40 mm+0,3 mm/ -0,00 mm beträgt.

9. Stanzniet nach einem der Ansprüche 5 bis 8, **dadurch gekennzeichnet, dass** die axiale Höhe (H) der Kopfaußenfläche (12) 0,40 mm + 0,00 mm/-0,40 mm beträgt.

10. Stanzniet nach einem der vorhergehenden Ansprüche, **dadurch gekennzeichnet, dass** er als Halbhohlstanzniet ausgebildet ist, bei dem die zentrale Bohrung (8) eine Sackbohrung ist.

11. Stanzniet nach Anspruch 10, **dadurch gekennzeichnet, dass** der Bohrungsgrund (26) der zentralen Bohrung (8) einen zentralen Radius (R3) und zwei seitliche Übergangsradien (R4) aufweist, von denen die beiden Übergangsradien (R4) jeweils tangential in den zentralen Radius (R3) und in die angrenzende Schaftinnenwand (16) übergehen.

12. Stanzniet nach Anspruch 10 oder 11, **dadurch gekennzeichnet, dass** der zentrale Radius (R3) des Bohrungsgrundes (26) größer als das 1,00fache, insbesondere 1,10fache des Durchmessers (D1) der Schaftaußenfläche (14) ist.

13. Stanzniet nach einem der Ansprüche 10 bis 12 in Verbindung mit Anspruch 5, **dadurch gekennzeichnet, dass** der zentrale Radius (R3) des Bohrungsgrundes (26) 6,01 mm + 0,10 mm/-0,10 mm beträgt.

14. Stanzniet nach Anspruch 13, **dadurch gekennzeichnet, dass** die beiden seitlichen Übergangsradien (R4) des Bohrungsgrundes (26) 0,27 mm + 0,05 mm/-0,05 mm betragen.

15. Stanzniet nach einem der Ansprüche 10 bis 14, **dadurch gekennzeichnet, dass** die axiale Höhe (H) des Nietkopfes (4) auf der zentralen Achse (X) kleiner als 1,00 mm ist.

16. Stanzniet nach einem der Ansprüche 1 bis 9, **dadurch gekennzeichnet, dass** er als Hohlstanzniet ausgebildet ist, bei dem die zentrale Bohrung (108) eine durchgehende Bohrung ist.

17. Stanzniet nach Anspruch 16, **dadurch gekennzeichnet, dass** sich die Schaftinnenfläche (116) im Wesentlichen über die gesamte Länge der zentralen Bohrung (108) zylindrisch ausgebildet ist.

18. Stanzniet nach Anspruch 16, **dadurch gekennzeichnet, dass** die Schaftinnenfläche (116a-e) am Kopfende des Stanznietes in eine Erweiterung (130a-e) übergeht.

19. Stanzniet nach Anspruch 18, **dadurch gekennzeichnet, dass** die Erweiterung (130a-e) eine konische Erweiterungsfläche aufweist.

20. Stanzniet nach Anspruch 19, **dadurch gekennzeichnet, dass** die konische Erweiterungsfläche durch eine Ecke (132a,b,c,e) oder einen Radius (132d) in die Schaftinnenfläche (116a-e) übergeht.

## Claims

1. A self-piercing rivet comprising a rivet head (4) and a rivet shank (6) with a central shank hole (8), which are all designed so as to be rotationally symmetrical with reference to a central axis (X), wherein the rivet head (4) has a top side (10) and a cylindrical head exterior surface (12) of a predetermined head diameter (D2),

   the rivet shank (6) having an essentially cylindrical shank exterior surface (14) and a cylindrical shank interior surface (16) limiting the central shank hole (8),
   the head exterior surface (12) and shank exterior surface (14) being joined by a conical underhead chamfer (18) and an underhead radius (R1), which merges tangentially into the conical underhead chamfer (18) and the shank exterior surface (14), respectively, **characterized in that**
   the conical underhead chamfer (18) and a radial plane of the self-piercing rivet include an angle ($\alpha$1) of 20°+5°/-5°, and
   the shank exterior surface (14) and shank interior surface (16) at the axial end remote from the rivet head (4) being joined by a plane shank face (20), a conical shank inside chamfer (22) and a shank end radius (R2), of which the shank end radius (R2) merges tangentially into the shank interior surface (16) and the conical shank inside chamfer (22), respectively, and the plane shank face (20) is joined with the shank exterior surface (14) by a cutting edge (24), the plane shank face (20) and a radial plane of the self-piercing rivet including an angle ($\alpha$3) of 0-3°/+3° and the conical shank inside chamfer (22) and a radial plane of the self-piercing rivet including an angle ($\alpha$2) of 45°+10°/-5°.

2. The self-piercing rivet according to claim 1, **characterized in that** the radial width (b2) of the plane shank face (20) is greater than 0.035 times the diameter (D1) of the shank exterior surface (14).

3. The self-piercing rivet according to claim 1 or 2, **char-**

9

acterized in that the underhead radius (R1) is smaller than 0.30 times, in particular 0.20 times the diameter (D1) of the shank exterior surface (14).

4. The self-piercing rivet according to one of the preceding claims, **characterized in that** the cutting edge (24) between the plane shank face (20) and the shank exterior surface (14) has a radial width (b1) of less than 0.1 mm.

5. The self-piercing rivet according to one of the preceding claims, wherein the head diameter (D2) is 7.75 mm + 0.15 mm/-0.15 mm and the diameter (D1) of the shank exterior surface (14) is 5.3 mm + 0.1 mm/-0.1 mm, **characterized in that** the radial width (b2) of the plane shank face (20) is 0.35 mm + 0.10 mm/-0.15 mm.

6. The self-piercing rivet according to claim 5, **characterized in that** the underhead radius (R1) is 0.67 mm + 0.10 mm/-0.10 mm.

7. The self-piercing rivet according to claim 5 or 6, **characterized in that** the shank end radius (R2) is 0.70 mm + 0.1 mm/-0.1 mm.

8. The self-piercing rivet according to one of the claims 5 to 7, **characterized in that** the diameter (D3) of the shank interior surface (16) is 3.40 mm+0.3 mm/-0.00 mm.

9. The self-piercing rivet according to one of the claims 5 to 8, **characterized in that** the axial height (H) of the head exterior surface (12) is 0.40 mm + 0.00 mm/-0.40 mm

10. The self-piercing rivet according to one of the preceding claims, **characterized in that** it is formed as a semihollow self-piercing rivet in which the central hole (8) is a blind hole.

11. The self-piercing rivet according to claim 10, **characterized in that** the hole bottom (26) of the central hole (8) has a central radius (R3) and two lateral transition radii (R4), wherein the two transition radii (R4) each tangentially merge into the central radius (R3) and an adjoining shank inside wall (16).

12. The self-piercing rivet according to claim 10 or 11, **characterized in that** the central radius (R3) of the hole bottom (26) is greater than 1.00 times, in particular 1.10 times the diameter (D1) of the shank exterior surface (14).

13. The self-piercing rivet according to one of the claims 10 to 12 in combination with claim 5, **characterized in that** the central radius (R3) of the hole bottom (26) is 6.01 mm + 0.10 mm/-0.10 mm.

14. The self-piercing rivet according to claim 13, **characterized in that** the two lateral transition radii (R4) of the hole bottom (26) are 0.27 mm + 0.05 mm/-0.05 mm.

15. The self-piercing rivet according to one of the claims 10 to 14, **characterized in that** the axial height (H) of the rivet head (4) on the central axis (X) is less than 1.00 mm.

16. The self-piercing rivet according to one of the claims 1 to 9, **characterized in that** it is formed as a hollow self-piercing rivet in which the central hole (108) is a through hole.

17. The self-piercing rivet according to claim 16, **characterized in that** the shank interior surface (116) is substantially formed cylindrically over the entire length of the central hole (108).

18. The self-piercing rivet according to claim 16, **characterized in that** the shank interior surface (116a-e) on the head end of the self-piercing rivet merges into an extension (130a-e).

19. The self-piercing rivet according to claim 18, **characterized in that** the extension (130a-e) has a conical extension surface.

20. The self-piercing rivet according to claim 19, **characterized in that** the conical extension merges into the shank interior surface (116a-e) via a corner (132a,b,c,e) or a radius (132d).

**Revendications**

1. Rivet autoperforant avec une tête de rivet (4) et une tige de rivet (6) avec un alésage de tige central (8), qui sont tous conçus à symétrie de révolution par rapport à un axe central (X), dans lequel la tête de rivet (4) présente une face supérieure (10) et une surface externe de tête (12) cylindrique d'un diamètre de tête prédéterminé (D2),

la tige de rivet (6) présente une surface externe de tige (14) essentiellement cylindrique et une surface interne de tige (16) cylindrique limitant l'alésage de tige central (8),
la surface externe de tête (12) et la surface externe de tige (14) sont reliées par un chanfrein de tête inférieure (18) conique et un rayon de tête inférieure (R1), lequel devient respectivement tangentiellement le chanfrein de tête inférieure (18) conique et la surface externe de tige (14), **caractérisé en ce que**
le chanfrein de tête inférieure (18) conique forme avec un plan radial du rivet autoperforant un an-

gle ($\alpha$1) de 20°+5°/-5°, et

la surface externe de tige (14) et la surface interne de tige (16) sont reliées à l'extrémité axiale opposée à la tête de rivet (4) par une surface frontale de tige (20) plane, un chanfrein interne de tige (22) conique et un rayon d'extrémité de tige (R2), desquels le rayon d'extrémité de tige (R2) devient respectivement tangentiellement la surface interne de tige (16) et le chanfrein interne de tige (22) conique et la surface frontale de tige (20) plane est reliée à la surface externe de tige (14) par une arête de coupe (24), la surface frontale de tige (20) plane formant avec un plan radial du rivet autoperforant un angle ($\alpha$3) de 0-3°/+3° et le chanfrein interne de tige (22) conique formant avec un plan radial du rivet autoperforant un angle ($\alpha$2) de 45°+10°/-5°.

2. Rivet autoperforant selon la revendication 1, **caractérisé en ce que** la largeur radiale (b2) de la surface frontale de tige (20) plane est supérieure à 0,035 fois le diamètre (D1) de la surface externe de tige (14).

3. Rivet autoperforant selon la revendication 1 ou 2, **caractérisé en ce que** le rayon de tête inférieure (R1) est inférieur à 0,30 fois, en particulier 0,20 fois le diamètre (D1) de la surface externe de tige (14).

4. Rivet autoperforant selon l'une des revendications précédentes, **caractérisé en ce que** l'arête de coupe (24) présente entre la surface frontale de tige (20) plane et la surface externe de tige (14) une largeur radiale (b1) de moins de 0,1 mm.

5. Rivet autoperforant selon l'une des revendications précédentes, dans lequel le diamètre de tête (D2) est de 7,75 mm + 0,15 mm/-0,15 mm et le diamètre (D1) de la surface externe de tige (14) est de 5,3 mm + 0,1 mm/-0,1 mm, **caractérisé en ce que** la largeur radiale (b2) de la surface frontale de tige (20) plane est de 0,35 mm + 0,10 mm/-0,15 mm.

6. Rivet autoperforant selon la revendication 5, **caractérisé en ce que** le rayon de tête inférieure (R1) est de 0,67 mm + 0,10 mm/-0,10 mm.

7. Rivet autoperforant selon la revendication 5 ou 6, **caractérisé en ce que** le rayon d'extrémité de tige (R2) est de 0,70 mm + 0,1 mm/-0,1 mm.

8. Rivet autoperforant selon l'une des revendications 5 à 7, **caractérisé en ce que** le diamètre (D3) de la surface interne de tige (16) est de 3,40 mm+0,3 mm/-0,00 mm.

9. Rivet autoperforant selon l'une des revendications 5 à 8, **caractérisé en ce que** la hauteur axiale (H) de la surface externe de tête (12) est de 0,40 mm + 0,00 mm/-0,40 mm.

10. Rivet autoperforant selon l'une des revendications précédentes, **caractérisé en ce qu'**il est conçu en tant que rivet autoperforant semi-tubulaire, dans lequel l'alésage central (8) est un alésage borgne.

11. Rivet autoperforant selon la revendication 10, **caractérisé en ce que** le fond d'alésage (26) de l'alésage central (8) présente un rayon central (R3) et deux rayons de transition latéraux (R4), desquels les deux rayons de transition (R4) deviennent respectivement tangentiellement le rayon central (R3) et la paroi interne de tige (16) adjacente.

12. Rivet autoperforant selon la revendication 10 ou 11, **caractérisé en ce que** le rayon central (R3) du fond d'alésage (26) est supérieur à 1,00 fois, en particulier 1,10 fois le diamètre (D1) de la surface externe de tige (14).

13. Rivet autoperforant selon l'une des revendications 10 à 12 en combinaison avec la revendication 5, **caractérisé en ce que** le rayon central (R3) du fond d'alésage (26) est de 6,01 mm + 0,10 mm/-0,10 mm.

14. Rivet autoperforant selon la revendication 13, **caractérisé en ce que** les deux rayons de transition latéraux (R4) du fond d'alésage (26) sont de 0,27 mm + 0,05 mm/-0,05 mm.

15. Rivet autoperforant selon l'une des revendications 1 à 14, **caractérisé en ce que** la hauteur axiale (H) de la tête de rivet (4) est inférieure à 1,00 mm sur l'axe central (X).

16. Rivet autoperforant selon l'une des revendications 1 à 9, **caractérisé en ce qu'**il est conçu en tant que rivet autoperforant tubulaire, dans lequel l'alésage central (108) est un alésage traversant.

17. Rivet autoperforant selon la revendication 16, **caractérisé en ce que** la surface interne de tige (116) est conçue cylindrique essentiellement sur toute la longueur de l'alésage central (108).

18. Rivet autoperforant selon la revendication 16, **caractérisé en ce que** la surface interne de tige (116a-e) devient à l'extrémité de tête du rivet autoperforant un prolongement (130a-e).

19. Rivet autoperforant selon la revendication 18, **caractérisé en ce que** le prolongement (130a-e) présente une surface de prolongement conique.

20. Rivet autoperforant selon la revendication 19, **caractérisé en ce que** la surface de prolongement conique devient en passant par un coin (132a,b,c,e)

**EP 1 783 381 B1**

ou un rayon (132d) la surface interne de tige (116a-e).

FIG 1

FIG 2 Stand der Technik

Erfindung

2mm

2mm

2mm

2mm

FIG 3    Stand der Technik            Erfindung

EP 1 783 381 B1

FIG 4

FIG 5    Stand der Technik                              Erfindung

I    II  III        VIII                    V        VI

III

IV        VIII

2000μm              2000μm

EP 1 783 381 B1

## FIG 6

Kopfzugversuch

## FIG 7

Scherzugversuch

## FIG 8

### Scherzugversuch

## FIG 9

### Kopfzugversuch

FIG 10

FIG 11

130a

132a

108a

102a

FIG 12

130b

132b

108b

102b

FIG 13

130c

132c

108c

102c

FIG 14

130d

132d

108d

102d

FIG 15

130e

132e

108e

102e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0720695 A
- EP 1064466 A
- EP 1229254 A
- EP 1387093 A
- DE 4431769
- DE 20319610 U1
- DE 20001103 U1
- US 20040068854 A1
- JP 2001159409 A
- JP 09317730 A